(19) Europäisches Patentamt
European Patent Office
Office européen des brevets

(11) **EP 3 593 939 B1**

(12) **EUROPÄISCHE PATENTSCHRIFT**

(45) Veröffentlichungstag und Bekanntmachung des Hinweises auf die Patenterteilung:
**26.01.2022  Patentblatt 2022/04**

(21) Anmeldenummer: **19185971.9**

(22) Anmeldetag: **12.07.2019**

(51) Internationale Patentklassifikation (IPC):
**B23P 19/06** (2006.01)     **B25B 29/02** (2006.01)
**F03D 13/10** (2016.01)     **F03D 13/20** (2016.01)
**B25B 21/00** (2006.01)     **B25B 27/16** (2006.01)
**G01B 5/14** (2006.01)     **G01B 11/14** (2006.01)

(52) Gemeinsame Patentklassifikation (CPC):
**B23P 19/067; B23P 19/06; B25B 21/002;**
**B25B 27/16; B25B 29/02; G01B 5/14; G01B 11/14**

(54) **VERFAHREN ZUR VERSCHRAUBUNG EINER FLANSCHVERBINDUNG, MESSWAGEN UND ROBOTER**

METHOD FOR SCREWING A FLANGE CONNECTION, MEASURING CART AND ROBOT

PROCÉDÉ DE VISSAGE D'UN RACCORDEMENT À BRIDE, CHARIOT DE MESURE ET  ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2018   DE 102018117061**

(43) Veröffentlichungstag der Anmeldung:
**15.01.2020   Patentblatt 2020/03**

(73) Patentinhaber: **Schaaf GmbH & Co. KG**
**41812 Erkelenz (DE)**

(72) Erfinder: **Köllges, Ralf**
**41812 Erkelenz (DE)**

(74) Vertreter: **Geskes, Christoph**
**Geskes Patent- und Rechtsanwälte**
**Gustav-Heinemann-Ufer 74b**
**50968 Köln (DE)**

(56) Entgegenhaltungen:
**EP-A1- 3 163 071        EP-A1- 3 195 974**
**WO-A1-2016/193297     JP-A- H08 257 851**
**JP-A- 2001 225 231     JP-A- 2015 059 755**
**KR-A- 20130 026 039**

• **DATABASE WPI Week 199136 Thomson Scientific, London, GB; AN 1991-265785 XP002795759, & SU 1 601 424 A (TAVLYBAEV F N) 23. Oktober 1990 (1990-10-23)**

EP 3 593 939 B1

## Beschreibung

Die Erfindung betrifft ein Verfahren zur Verschraubung einer Flanschverbindung, einen Messwagen und einen Roboter zur Ausführung des Verfahrens.

Aus dem Stand der Technik ist bekannt, dass insbesondere große Flanschverbindungen, wie sie beispielsweise bei Windkraftanlagen verwendet werden, verschraubt werden. Hierbei werden Schauben von einem Techniker mittels einer hydraulischen Bolzenspannvorrichtung verspannt. Eine solche hydraulische Bolzenspannvorrichtung ist beispielsweise der DE 10 2018 110 482 A1 zu entnehmen.

SU 1 601 424 A1 beschreibt ein Montageverfahren für großformatige Flanschverbindungen. Bei diesem Montageverfahren werden die Flansche aneinander gelegt und dann Bolzen in Flanschlöcher gesetzt und in einer vorbestimmten Reihenfolge angezogen. Die Bolzen werden in zwei Schritten angezogen: Zuerst werden zwei Bolzen in zwei gegenüberliegende Löcher gesetzt. Dann werden die Spaltmaße an den Stellen aller Löcher gemessen und die Löcher in derjenigen Reihenfolge nummeriert, in der die Spaltmaße kleiner werden. Und schließlich werden die Bolzen in der Reihenfolge dieser Nummerierung angezogen.

Die SU 1 601 424 A1 offenbart die Merkmale des Oberbegriffes des Anspruchs 1.

JP 2001 225 231 A beschreibt ein Montageverfahren für Flanschverbindungen. Bei diesem Montageverfahren wird das Spaltmaß an einem Bolzensystem gemessen. Dann wird der Bolzen in Abhängigkeit von diesem Spaltmaß gelängt, und nach Erreichen eines Sollwerts wird die Mutter angezogen.

JP H08 257 851 A beschreibt einen transportablen Manipulator zum Anziehen und Lösen von Bolzensystemen für Flansche. Dieser Manipulator trägt an seinem freien Ende einen Schraubenschlüssel und einen Abstandssensor und wird mit Hilfe von zwei Schlauchschellen an einem Rohr in der Nähe der Flansche lösbar angebracht. Mit dem Abstandssensor wird die Lage der Flansche und der Bolzensysteme bestimmt, um den Schraubenschlüssel an einem gewünschten Bolzensystem ansetzen zu können.

Groß dimensionierte Flansche sind an ihren Auflageflächen nicht planar herstellbar. Die Flansche einer Flanschverbindung liegen somit vor dem Anziehen der Schraubverbindungen nicht überall aufeinander auf. Beim Anziehen der Schraubverbindungen kann zudem der Effekt der Schüsselbildung auftreten, wobei die Flansche im Bereich einiger Schraubverbindungen auch nach dem Anziehen gegebenenfalls nicht aufliegen, was die Belastung auf die Schraubverbindung im Betrieb erhöht und zu einem verfrühten Versagen der Schraubverbindung führen kann.

Aufgabe der Erfindung ist es, die oben genannten Nachteile zu überkommen. Insbesondere ist die Aufgabe der Erfindung ein kostengünstiges Verschraubungsverfahren für Flanschverbindungen und Vorrichtungen dafür zur Verfügung zu stellen, welche eine schnelle, optimale und sichere Verschraubung ermöglicht.

Die Aufgabe wird erfindungsgemäß mittels eines Verfahrens zur Verschraubung einer Flanschverbindung umfassend zumindest einen ersten Flansch , einen zweiten Flansch und eine Vielzahl von Bolzensystemen gelöst, wobei der erste Flansch und der zweite Flansch jeweils eine Vielzahl von Flanschausnehmungen aufweisen, die jeweils zueinander ausrichtbar sind und in denen die Vielzahl von Bolzensystemen anordenbar sind, wobei zumindest eine Vielzahl von den Bolzensystemen zuordenbaren Spaltmaßen zwischen dem ersten Flansch und dem zweiten Flansch gemessen werden, wobei die einzelnen gemessenen Spaltmaße auswertbar und den einzelnen Bolzensystemen zuordenbar gespeichert werden, wobei mittels eines Anziehmittels die Bolzensysteme in einer Reihenfolge in Abhängigkeit der diesen zugeordneten Spaltmaße angezogen werden. Die Bolzensysteme werden in zumindest einem ersten Anzugsschritt angezogen, bis ein jeweils zugeordnetes Spaltmaß kleiner oder gleich einem Referenzspaltmaß ist.

Weiterhin wird die Aufgabe erfindungsgemäß mittels eines Messwagens zur Messung von zumindest einer Vielzahl von Bolzensystemen einer Flanschverbindung zuordenbaren Spaltmaßen zwischen einem ersten Flansch und einem zweiten Flansch gemäß dem obigen Verfahren zumindest umfassend zumindest ein Spaltmessgerät und eine Bewegungseinrichtung gelöst, wobei die Bewegungseinrichtung zumindest ein erstes Bewegungselement und zumindest ein Gestell aufweist, wobei an dem Gestell das zumindest eine erste Bewegungselement und das Spaltmessgerät angeordnet sind, wobei das zumindest eine erste Bewegungselement auf einem ersten Flansch anordenbar ist. Das Spaltmessgerät weist eine Datenverbindung zu einem Rechner auf, auf dem Messergebnisse auswertbar speicherbar sind.

Weiterhin wird die Aufgabe vorzugsweise mittels eines Roboters zur Ausführung eines oben genannten Verfahrens gelöst, wobei dieser einen oben genannten Messwagen und zumindest ein Anziehmittel zum Anziehen von Bolzensystemen aufweist.

Es wird ein Verfahren zur Verschraubung einer Flanschverbindung umfassend zumindest einen ersten Flansch, einen zweiten Flansch und eine Vielzahl von Bolzensystemen vorgeschlagen, wobei der erste Flansch und der zweite Flansch jeweils eine Vielzahl von Flanschausnehmungen aufweisen, die jeweils zueinander ausrichtbar sind und in denen die Vielzahl von Bolzensystemen anordenbar sind. Insbesondere mittels eines Spaltmessgerätes wird zumindest eine Vielzahl von den Bolzensystemen zuordenbaren Spaltmaßen zwischen dem ersten Flansch uns dem zweiten Flansch gemessen, wobei die einzelnen gemessenen Spaltmaße auswertbar und den einzelnen Bolzensystemen zuordenbar gespeichert werden, wobei mittels eines Anziehmittels die Bolzensysteme in einer Reihenfolge in Abhängigkeit der diesen zugeordneten Spaltmaße angezogen werden.

Die Flanschverbindung weist zumindest einen ersten Flansch mit zumindest einer ersten Flanschausnehmung und einen zweiten Flansch mit zumindest einer zweiten Flanschausnehmung auf. Insbesondere weist sowohl der erste Flansch als auch der zweite Flansch eine Vielzahl von Flanschausnehmungen auf, in die eine Vielzahl von Bolzensystemen einbringbar sind.

Ein Bolzensystem umfasst insbesondere einen Bolzen, zumindest eine erste Mutter und gegebenenfalls zumindest eine Unterlegscheibe. Insbesondere ist ein Bolzensystem eine Schraubengarnitur, bevorzugt eine HV-Schraubengarnitur, zumindest umfassend eine Schraube, eine erste Mutter und zumindest eine, bevorzugt zwei, Unterlegscheiben. In einer weiteren Ausgestaltung umfasst das Schraubensystem einen Gewindebolzen und zwei Muttern. In einer weiteren Ausgestaltung umfasst das Bolzensystem ein Widerlager. Insbesondere kann das Widerlager ein Schraubenkopf oder eine zweite Mutter umfassen, die der ersten Mutter gegenüberliegend auf dem Bolzen angeordnet ist. Bevorzugt ist eine zweite Mutter als Widerlager vorgesehen, wenn der Bolzen als Stehbolzen ausgestaltet ist.

Vorzugsweise weist zumindest die erste Mutter ein Mutterinnengewinde mit einer Geometrie auf, die im Wesentlichen einer Geometrie des Bolzens entspricht, der mittels einer bestimmten Maximalkraft, die auch als bestimmte Vorspannkraft angesprochen werden kann, gedehnt beziehungsweise gelängt ist. Vorzugsweise ist der Bolzen bis zu einer Dehngrenze gelängt. Wird im Rahmen der Erfindung der Begriff "Geometrie" in Bezug auf Innen- und/oder Außengewinden verwendet, ist hierunter bevorzugt zumindest die Gewindesteigung, der Gewindewinkel und/oder der Gewindedurchmesser zu verstehen.

Der Begriff "im Wesentlichen" gibt einen Toleranzbereich an, der für den Fachmann unter wirtschaftlichen und technischen Gesichtspunkten zu vertreten ist, sodass das entsprechende Merkmal noch als solches zu erkennen oder verwirklicht ist

Bevorzugt weist das Widerlager den Schraubenkopf oder die zweite Mutter auf. Weiter bevorzugt ist das Widerlager unmittelbar mit dem Bolzenmaterial verbunden, und ist vorzugsweise als zweite Mutter mit einem Vielkant, bevorzugt Sechskant, ausgebildet. Besonders bevorzugt ist der Bolzen, bevorzugt vor Einbau in die Flanschverbindung, zumindest einmal bis zu seiner Dehngrenze gedehnt beziehungsweise gelängt worden, insbesondere bis etwa 95 % seiner Dehngrenze, weiter bevorzugt bis etwa 100 % seiner Dehngrenze.

Flanschverbindungen mit großem Durchmesser, wie diese beispielsweise im Bereich der Windkraftanlagen Verwendung finden, weisen Toleranzen in der Ebenheit von Verbindungsflächen auf, die ein spaltfreies Aufeinanderliegen der einzelnen Flansche nicht ermöglicht. Eine unverspannte Flanschverbindung weist damit einen zumindest teilweise umlaufenden Spalt auf. Dieser Spalt weißt ein sich umlaufend stetig oder unstetig veränderndes Spaltmaß auf. Insbesondere wird das Spaltmaß wie vorgeschlagen zumindest jeweils in einem Messabschnitt der Bolzensysteme gemessen, so dass jedem Bolzensystem zumindest ein Spaltmaß zuordenbar ist. Bevorzugt ist ein Messabschnitt radial, bevorzugt radial außenliegend, von einem jeweiligen Bolzensystem angeordnet, wobei der Messabschnitt ein Umfangsabschnitt oder ein Messpunkt sein kann. Bevorzugt wird zumindest ein Spaltmaß im Wesentlichen radial zu einem Bolzensystem ermittelt. In einer weiteren Ausgestaltung wird ein Spaltmaß in einem Umfangsabschnitt ermittelt, der einen Winkel aufweist, der zumindest ein, bevorzugt genau ein Bolzensystem bevorzugt mittig einschließt. Weiter bevorzugt wird ein Spaltmaß in einem Messabschnitt ermittelt, der von einem Winkel eingeschlossen ist, wobei sich das Bolzensystem im Wesentlichen auf der Winkelhalbierenden befindet. Insbesondere ist in einer Ausgestaltung vorgesehen, dass die Flanschverbindung in Messabschnitte aufgeteilt wird. Bevorzugt sind etwa halb so viele bis genau so viele Messabschnitte vorgesehen, wie Bolzensysteme in der Flanschverbindung vorgesehen sind. Wird das Spaltmaß über einen Umfangsabschnitt ermittelt, wird vorzugsweise ein arithmetischer Mittelwert des Spaltmaßes über den Umfangsabschnitt ermittelt. Das Spaltmaß, das einem Bolzensystem zuordenbar ist, wird vorzugsweise auf dem Radius der Flanschverbindung ermittelt, der durch den Mittelpunkt des Bolzensystems geht. Der Radius der Flanschverbindung ist beispielsweise bei einer Windkraftanlage im Wesentlichen gleich dem Radius eines Turmes der Windkraftanlage. Bevorzugt wird bei im Wesentlichen runden Flanschen rechtwinklig zur Tangente an einer Flanschkante am entsprechenden Radius gemessen. Weiter bevorzugt wird bei im Wesentlichen geraden Flanschen auf einer Senkrechten zur Flanschkante gemessen, wobei bevorzugt auf der Senkrechten zur Flanschkante im Wesentlichen der Mittelpunkt des Bolzensystems angeordnet ist. Weiter bevorzugt wird das Spaltmaß im Bereich der Flanschkante, bevorzugt an der Flanschkante, gemessen. Je nach Ausgestaltung der Flanschverbindung kann im Bereich einer Flanschinnenkante oder einer Flanschaußenkante gemessen werden. Der Bereich der Flanschkante ist insbesondere ein Abschnitt zwischen den Bolzensystem und der Flanschkante.

Wird im Rahmen der Erfindung der Begriff "etwa" im Zusammenhang mit Werten oder wertebereichen verwendet, so ist darunter ein Toleranzbereich zu verstehen, den der Fachmann auf diesem Gebiet für üblich erachtet, insbesondere ist ein Toleranzbereich von $\pm 20$ %, bevorzugt $\pm 10$ %, weiter bevorzugt $\pm 5$ % vorgesehen.

In einer Ausführungsform ist vorgesehen, dass ein Spaltmaß über einen Umfangsabschnitt ermittelt wird, der etwa ein bis etwa zehn, bevorzugt etwa ein bis etwa vier, weiter bevorzugt etwa ein bis etwa zwei Bolzensysteme einschließt. Besonders bevorzugt ist vorgesehen, dass für jedes Bolzensystem ein Spaltmaß ermittelt wird.

Zur Ermittlung des Spaltmaßes wird bevorzugt ein Spaltmessgerät verwendet. Das Spaltmessgerät kann unterschiedliche Ausgestaltungen aufweisen, um ein Spaltmaß zu ermitteln.

Das Spaltmessgerät misst in einer Ausführungsform einen Abstand von einer Oberseite des ersten Flansches zu einer Unterseite des zweiten Flansches, im Folgenden die Dicke der Flanschverbindung. Durch Messung des Abstandes von der Oberseite des ersten Flansches zu der Unterseite des zweiten Flansches an unterschiedlichen Positionen der Flanschverbindung, insbesondere an den Bolzensystemen zugeordneten Messstellen, kann insbesondere ein relativer Unterschied der Spaltmaße der Flanschverbindung an den Messstellen zueinander ermittelt werden. Bevorzugt wird die ermittelte minimale Dicke der Flanschverbindung von der ermittelten maximalen Dicke der Flanschverbindung abgezogen, um eine Toleranzbreite Δd der Spaltmaße zu ermitteln.

Alternativ oder zusätzlich kann eine Ermittlung der Spaltmaße mittels eines optoelektronischen Messverfahrens, beispielsweise einer Kamera oder eines Lasermesssystems, erfolgen. Insbesondere wird ein Spalt an den Messstellen, die insbesondere den Bolzensystemen zugeordnet sind, fotografiert oder gescannt und die gewonnenen Daten hinsichtlich des Spaltmaßes insbesondere automatisiert ausgewertet. In einer Ausgestaltung können die optoelektronischen Daten für die Spaltmaße mit denjenigen durch eine mechanische, insbesondere die oben genannte, Messung der Dicke der Flanschverbindung kombiniert werden. Insbesondere kann mittels der Kombination unterschiedlicher Messmethoden ein Spaltmaß ermittelt werden, das bei der minimalen Dicke der Flanschverbindung vorliegt.

Das Anziehmittel ist bevorzugt eine insbesondere hydraulische Bolzenspannvorrichtung. Vorzugsweise umfasst die Bolzenspannvorrichtung ein Gehäuse und eine Zugeinheit. Bevorzugt umschließt das Gehäuse die Zugeinheit. Weiter bevorzugt weist die Zugeinheit an einem Greifbereich ein Zugeinheitsinnengewinde auf. Bevorzugt ist der Bolzen des Bolzensystems nicht vollständig in der Flanschausnehmung angeordnet. Bevorzugt ragt der Bolzen zu einem Teil auf der Oberseite des ersten Flansches und der Unterseite des zweiten Flansches der Flanschausnehmung heraus. Das Zugeinheitsinnengewinde ist vorzugsweise in ein Außengewinde des Bolzens greifbar ausgebildet. Besonders bevorzugt greift die Zugeinheit mit dem Zugeinheitsinnengewinde in das Außengewinde des Bolzens, um diesen in einem Anzugsschritt zu längen. In einem anschließenden Anzugsschritt wird mindestens die erste Mutter mit dem gelängten Gewindebolzen nachgedreht und bevorzugt mit einem bestimmten Drehmoment angezogen. Besonders bevorzugt weist zumindest die erste Mutter ein Innengewinde auf, das in seiner Geometrie, bevorzugt nahezu oder vollständig, dem gelängten Außengewindes des Bolzens ausgebildet ist.

In einer weiteren Ausführungsform umfasst das Anziehmittel ein Mittel, um zumindest die erste Mutter des Bolzensystems mit einem Drehmoment anzuziehen, das ausreichend ist, die Flanschverbindung zu verspannen.

Bevorzugt wird eine bolzensystemtypischen Dehnverhaltens und eines bolzenspannvorrichtungstypischen Kompressionsverhaltens im Vorfeld der Montage der Flanschverbindung ermittelt. In einer Ausführungsform ist vorgesehen, dass ein Verfahren zum Anziehen eines Bolzensystems die Schritte umfasst:

a) Montieren der Bolzenspannvorrichtung an den Bolzen auf einer Oberseite des ersten Flansches der Flanschverbindung,
b) Aufbringen einer Zugkraft auf den Bolzen, bis eine bestimmte Maximalkraft erreicht ist, und Ermitteln eines Längungswertes, der mit einer Bolzenlängung einer Bolzenspannvorrichtungskompression und einer Flanschkompression der Flanschverbindung korreliert,
c) Nachdrehen der ersten Mutter mit einem bestimmten Drehmoment,
d) Ablassen der Zugkraft (Fb),
e) bevorzugt mindestens einmalige Wiederholung der Schritte b) bis d), und
f) Auswerten der ermittelten Werte für Zugkraft und Längungswert, Bestimmen der Flanschkompression und daraus Bestimmen der Flanschkompressionskraft, insbesondere während der Durchführung des Verfahrens, bevorzugt für jeden Zeitpunkt der Druckbeaufschlagung und des Druckablassens. Insbesondere stellen die Schritte a) bis f) einen beispielhaften Anzugsschritt dar. Weitere Möglichkeiten das Bolzensystem insbesondere hydraulisch anzuziehen beziehungsweise zu verspannen können ebenfalls einen Anzugsschritt darstellen.

Die Flanschkompressionskraft entspricht der Zugkraft, die auf den Bolzen aufgebracht werden müsste, um die erste Mutter von dem Flansch zu lösen beziehungsweise abzuheben, beziehungsweise der Zugkraft, bei der die erste Mutter ohne Krafteinleitung in den Flansch auf dem Flansch aufliegt. Insbesondere kann die Flanschkompressionskraft durch Ermittlung der Steigung der gemessenen Hookeschen Geraden des Längungswertes beziehungsweise der Bolzenlängung ermittelt werden. Die Steigung des Verhältnisses von Kraft zur Bolzenlängung ist steiler bis zu dem Punkt, an dem die erste Mutter von dem Flansch abhebt. Insbesondere ist die Flanschkompression eine Verformung der Flansche, die zur Schließung des Spaltmaßes zwischen den Flanschen notwendig ist und/oder die Verformung eines einzelnen Flansches insbesondere unter der ersten Mutter.

Die Auswertung kann bevorzugt schon während der Ausführung des Anziehschrittes erfolgen, so dass nach Beendigung des Anziehschrittes die Flanschkompressionskraft und die Flanschkompression bekannt sind. Insbesondere ist vorgesehen, dass die Flanschkompression $\Delta f$ aus dem Längungswert $\Delta l$ wie folgt ermittelt wird: $\Delta f = \Delta l - \Delta b - \Delta s$, wobei $\Delta b$ die Bolzenlängung und $\Delta s$ die Bolzenspannvorrichtungskompression ist. Da bolzensystemtypisch die Bolzenlängung $\Delta b$ bekannt ist und bolzenspannvorrichtungstypisch die Bolzenspannvorrichtungskompression für alle Zugkräfte bekannt ist und der Längungswert dem gemessenen Wert entspricht, kann die Flanschkompression, wie oben geschildert, berechnet werden. Insbesondere kann durch die Ermittlung der Flanschkompression das Verringern beziehungsweise Schließen des Spaltmaßes dokumentiert werden, bevorzugt unmittelbar beim Anziehen der Bolzensysteme.

Mit dem beschriebenen Anziehschritt kann vorteilhafterweise eine sichere Verpressung der Flansche erfolgen, insbesondere, wenn diese Toleranzen aufweisen, die zu Spalten zwischen den Flanschen führen können. Weiterhin vorteilhaft können mittels der Messvorrichtung und/oder mittels der Bolzenverspannung ermittelte Spaltmaße der Flanschverbindung miteinander verglichen werden. Weiter vorteilhaft können aufgrund der ermittelten Spaltmaße Maßnahmen geschaffen werden, die eine optimale Reihenfolge der Verspannung der Bolzensysteme ermöglichen, insbesondere im Hinblick auf Spaltmaße der jeweils benachbarten Bolzensysteme. Insbesondere im Windkraftanlagenbereich werden sehr große Flanschverbindungen verwendet, die, anders als im normalen Maschinenbau, nicht exakt hergestellt und/oder berechnet werden können. Das führt dazu, dass beim Verspannen des Bolzens zuerst Spalte zwischen den Flanschen geschlossen werden und sich danach erst eine Kraft zur Kompression der Flansche aufeinander aufbauen kann. Aus dem Stand der Technik ist lediglich bekannt, die Bolzen mit einer bestimmten Kraft, beispielsweise etwa 70 % bis etwa 80 % zur Dehngrenze, zu spannen und anzunehmen, dass die Kraft, die zur Spannung des Bolzens verwendet wird, etwa der Flanschkompressionskraft entspricht.

Mit dem beschriebenen Anziehschritt ist es nun möglich, sowohl die Flanschkompression als auch die Verformung des Flansches unter der ersten Mutter des Bolzensystems als auch die Flanschkompressionskraft, also die Kraft, mit der das Bolzensystem die beiden Flansche aufeinander presst, zu bestimmen und zu dokumentieren. In einer Ausgestaltung ist dies für einen ersten Anziehschritt vorgesehen. In einer weiteren Ausgestaltung ist diese Art der Verspannung des Bolzensystems für den zweiten Anziehschritt vorgesehen, vorzugsweise für den Anziehschritt, in dem das Bolzensystem bevorzugt mit Soll-Werten verspannt wird. Das bevorzugte Ermitteln eines bolzensystemtypischen Dehnverhaltens sowie des bolzenvorrichtungstypischen Kompressionsverhaltens hat den Vorteil, dass zumindest die Bolzen und Bolzenspannvorrichtungen jeweils einer Charge, weiter bevorzugt einer Produktreihe, weiter bevorzugt einer Produktreihe für die Ausführung des Verfahrens, verwendet werden können. Da das Verhalten der Bolzen beziehungsweise des Bolzensystems und der Bolzenspannvorrichtung für die jeweilige Zugkraft, insbesondere auch beim mehrfachem Spannen und Entspannen des Bolzens bekannt ist, können eindeutige Rückschlüsse auf das Verhalten der Flansche gezogen werden.

Vorzugsweise ist das Referenzspaltmaß ein Relativspaltmaß von insbesondere etwa 5 % bis etwa 50 %, bevorzugt etwa 5 % bis etwa 30 %, weiter bevorzugt etwa 10 % bis etwa 20 %. In einer Ausgestaltung ist vorgesehen, dass Bolzensysteme, die einem Spaltmaß kleiner dem Referenzspaltmaß zugeordnet sind, in dem ersten Anziehschritt nicht angezogen werden. Vorzugsweise erfolgt eine Messung des Spaltmaßes während des ersten Anziehschrittes bevorzugt bei jedem Bolzensystem, so dass bevorzugt ein Bolzensystem soweit angezogen werden kann, bis bevorzugt zumindest das Referenzspaltmaß erreicht ist.

Das Relativspaltmaß ist ein prozentualer Wert eines Spaltmaßes an der jeweiligen Flanschverbindung. Das Relativspaltmaß $S_{\%}$ ist ermittelbar mit der Formel

$$S_{\%} = (Sp - Sp_{min}) / (Sp_{max} - Sp_{min}) * 100,$$

wobei Sp das jeweils gemessene beziehungsweise einem Bolzensystem zugeordnete Spaltmaß, $Sp_{min}$ das kleinste an der Flanschverbindung ermittelte Spaltmaß und $Sp_{max}$ das größte an der Flanschverbindung ermittelte Spaltmaß ist. So weißt das kleinste Spaltmaß $Sp_{min}$ ein Relativspaltmaß $S_{\%}$ von 0 % und das größte Spaltmaß $Sp_{max}$ ein Relativspaltmaß $Sp_{\%}$ von 100 % auf. Wird anstelle des Spaltmaßes indirekt die Dicke der Flanschverbindung ermittelt, so ist Sp die jeweils gemessene beziehungsweise einem Bolzensystem zugeordnete Dicke der Flanschverbindung, $Sp_{min}$ die kleinste an der Flanschverbindung ermittelte Dicke und $Sp_{max}$ die größte an der Flanschverbindung ermittelte Dicke. In einer Ausgestaltung ist vorgesehen, dass eine mittlere Dicke $D_1$ des ersten Flansches und eine mittlere Dicke $D_2$ des zweiten Flansches vor der Montage der Flansche aufeinander ermittelt werden. Bevorzugt ist in einer Ausgestaltung vorgesehen, dass $Sp_{min} = D_1 + D_2$ angenommen wird und entsprechend in die obige Rechnung einfließt.

Wird das Spaltmaß direkt gemessen, beispielsweise mittels eines optoelektronischen Messverfahrens, ist $Sp_{min}$ das kleinste Spaltmaß, $Sp_{max}$ das größte Spaltmaß und Sp das jeweils einem Bolzensystem zugeordnete Spaltmaß. So kann unabhängig von der Messmethode das Relativspaltmaß ermittelt werden. In einer Ausführungsform werden mehrere Messmethoden angewandt, um das Spaltmaß zu ermitteln. Vorteilhaft kann mittels eines Vergleichs der unterschiedlich ermittelten Relativspaltmaße an einem Messpunkt beziehungsweise in einem Messbereich Messfehler erkannt werden.

In einer weiteren Ausgestaltung ist vorgesehen, dass während oder nach dem Anziehen des Bolzensystems insbesondere mittels des zumindest einen Spaltmessgerätes ermittelt wird, wie sich das Spaltmaß ändert. Insbesondere wird mittels des Spaltmessgerätes insbesondere in Verbindung mit dem Anziehmittel ermittelt, bei welchem Krafteintrag in den Bolzen des Bolzensystems der Spalt zumindest bis zu dem Referenzspaltmaß geschlossen wird.

In einer weiteren Ausführungsform ist vorgesehen, dass die Bolzensysteme in zumindest einem ersten Anzugsschritt angezogen werden, bis ein jeweils zugeordnetes Spaltmaß kleiner oder gleich dem Referenzspaltmaß ist. In einer weiteren Ausgestaltung ist vorgesehen, dass in einem ersten Anzugsschritt eine erste Flanschkompressionskraft angestrebt wird, die insbesondere nicht der später zu erreichenden Soll-Flanschkompressionskraft entspricht. Insbesondere ist die erste Flanschkompressionskraft kleiner als die Soll-Flanschkompressionskraft, mit der die Flanschverbindung mittels des jeweiligen Bolzensystems verspannt werden soll.

In einer weiteren Ausführungsform ist vorgesehen, dass in einem zweiten Anzugsschritt alle Bolzensysteme mit einem Sollverspannungswert angezogen werden. Der Sollverspannungswert ist in einer Ausgestaltung eine Soll-Vorspannkraft, die auf den Bolzen des Bolzensystems aufgebracht wird. In einer weiteren Ausgestaltung ist der Sollverspannungswert eine Soll-Flanschkompressionskraft, die mittels des Bolzensystems auf den Flansch aufgebracht wird und insbesondere unter der ersten Mutter respektive der Unterlegscheibe in den Flansch eingebracht wird.

Vorzugsweise erfolgt der zweite Anzugsschritt nachdem alle anderen Bolzensysteme der Flanschverbindung mittels des ersten Anzugsschritts angezogen wurden beziehungsweise alle Spaltmaße kleiner oder gleich dem Referenzspaltmaß sind. Im zweiten Anzugsschritt werden bevorzugt die Bolzensysteme der Reihe nach oder jeweils gegenüberliegend angezogen.

Die Bolzensysteme werden erfindungsgemäß in einer Reihenfolge in Abhängigkeit der diesen zugeordneten Spaltmaße angezogen. Bei Bestimmung der Reihenfolge können weitere Einflussfaktoren neben dem Spaltmaß berücksichtigt werden. Beispielsweise können bei Bestimmung der Reihenfolge eine Anzahl der Bolzensysteme, Durchmesser des Flansches, Duktilität eines Flanschwerkstoffes und/oder weitere Faktoren. Die Reihenfolge kann auch mittels zumindest eines Simulationsverfahrens und/oder zumindest eines im Vorfeld durchgeführten Tests bestimmt werden, wobei insbesondere die Ergebnisse des zumindest einen Simulationsverfahrens und/oder Tests in die Bestimmung der Reihenfolge mit einfließen. Insbesondere kann in die Bestimmung der Reihenfolge zumindest ein Messergebnis aus zumindest einem vorher durchgeführten Verfahren zur Verschraubung einer Flanschverbindung berücksichtigt werden.

In einer Ausführungsform ist vorgesehen, dass die Spaltmaße gruppiert werden in Bereiche von Spaltmaßen. In einer Ausgestaltung weist zumindest eine Gruppe der Bereiche von Spaltmaßen zumindest zwei gemessene Spaltmaße auf. In einer Ausgestaltung erfolgt die Gruppierung der Spaltmaße nach der Speicherung dieser. In einer weiteren Ausgestaltung ist vorgesehen, dass die Spaltmaße in Bereiche von Relativspaltmaßen gruppiert werden, wobei das Relativspaltmaß

$$Sp_{\%} = (Sp - Sp_{min}) / (Sp_{max} - Sp_{min}) * 100,$$

wobei Sp das jeweils einem Bolzensystem zugeordnete Spaltmaß, $Sp_{min}$ das kleinste an der Flanschverbindung ermittelte Flanschmaß oder die Summe der Dicken der Flansche und $Sp_{max}$ das größte an der Flanschverbindung ermittelte Spaltmaß ist.

Weiter bevorzugt werden die Spaltmaße in etwa 3 bis etwa 20, weiter bevorzugt etwa 5 bis etwa 15, weiter bevorzugt etwa 11 Gruppen aufgeteilt. Beispielsweise ist eine erste Gruppe mit Bolzensystemen zugeordneten Relativspaltmaßen von >95 % bis 100 %, eine zweite Gruppe mit Bolzensystemen zugeordneten Relativspaltmaßen von >85 % bis 95 %, eine dritte Gruppe mit Bolzensystemen zugeordneten Relativspaltmaßen von >75 % bis 85 %, eine vierte Gruppe mit Bolzensystemen zugeordneten Relativspaltmaßen von >65 % bis 75 %, eine fünfte Gruppe mit Bolzensystemen zugeordneten Relativspaltmaßen von >55 % bis 65 %, eine sechste Gruppe mit Bolzensystemen zugeordneten Relativspaltmaßen von >45 % bis 55 %, eine siebte Gruppe mit Bolzensystemen zugeordneten Relativspaltmaßen von >35 % bis 45 %, eine achte Gruppe mit Bolzensystemen zugeordneten Relativspaltmaßen von >25 % bis 35 %, eine neunte Gruppe mit Bolzensystemen zugeordneten Relativspaltmaßen von >15 % bis 25 %, eine zehnte Gruppe mit Bolzensystemen zugeordneten Relativspaltmaßen von >5 % bis 15 % und eine elfte Gruppe mit Bolzensystemen zugeordneten Relativspaltmaßen von 0 % bis 5 % vorgesehen. Die Gruppeneinteilung kann auch größere oder kleinere Bereiche von absoluten beziehungsweise gemessenen Spaltmaßen oder Relativspaltmaßen umfassen. In einer weiteren Ausführungsform ist vorgesehen, dass die Spaltmaße insbesondere nur nach den absoluten Messwerten gruppiert werden. In einer weiteren Ausgestaltung ist vorgesehen, dass die insbesondere gruppierten Bolzensysteme in einer bevorzugt frei bestimmbaren Reihenfolge vorgespannt werden bis zu einer maximalen Vorspannkraft, bis zu einer im Vorfeld bestimmten Vorspannkraft und/oder bis diese zumindest einer bestimmten Gruppe zuordenbar ist.

In einer bevorzugten Ausgestaltung ist vorgesehen, dass die Bolzensysteme, die der ersten Gruppe mit den Spaltmaßen, insbesondere größten Relativspaltmaßen, zuordenbar sind, zuerst angezogen werden. Danach werden bevorzugt die Bolzensysteme der zweiten Gruppe mit dem nächst kleineren Bereich von Spaltmaßen, insbesondere Relativspaltmaßen, angezogen und so weiter. Auf diese Weise kann eine Schüsselung des Flansches beim Anziehen effizient verringert werden. Weiter bevorzugt wird damit erreicht, dass die größten Spaltmaße verringert und weiter bevorzugt geschlossen werden. Vorteilhafter Weise wird durch das Anziehen der Bolzensysteme von dem größten Relativspaltmaß zum kleinsten Relativspaltmaß oder dem gruppenweisen Anziehen von der Gruppe der größten Relativspaltmaße zu der Gruppe der kleinsten Relativspaltmaße eine gleichmäßige Krafteinleitung durch die Bolzensysteme in die Flanschverbindung erreicht. In einer weiteren Ausführungsform ist vorgesehen, dass wenn Spaltmaße nicht schließbar sind, in diesen Bereichen Maßnahmen getroffen werden, eine minimal erforderliche Flanschkompressionskraft einzustellen. Beispielsweise werden einzelne oder alle Bolzensysteme gelöst und zumindest ein vorzugsweise passendes Spaltmaßblech in den entsprechenden Bereich der Flanschverbindung zwischen die Flansche eingelegt und anschließend erneut die entsprechenden Bolzensysteme angezogen.

In einer Ausführungsform ist vorgesehen, dass die Reihenfolge des Anziehens der Bolzensysteme innerhalb einer Gruppe beliebig sein kann. So ist bevorzugt vorgesehen, dass die Bolzen einer Gruppe in der Reihenfolge angezogen werden, wie diese am schnellsten durch einen ausführenden Techniker oder einen Roboter erreicht werden. In einer weiteren Ausgestaltung ist vorgehen, dass die Bolzensysteme einer Gruppe im Wesentlichen gleichzeitig angezogen werden.

In einer weiteren Ausführungsform ist vorgesehen, dass nach dem Anziehen zumindest einer Gruppe, bevorzugt aller Gruppen, weiter bevorzugt zwei bis fünf Gruppen, weiter bevorzugt zwei bis drei Gruppen die Spaltmaße erneut ermittelt werden und die zugeordneten Bolzensysteme in einer Reihenfolge entsprechend den neu ermittelten Spaltmaßen, bevorzugt Relativspaltmaßen, beziehungsweise den Gruppen von Spaltmaßen, bevorzugt Relativspaltmaßen, angezogen werden.

In einer beispielhaften Ausgestaltung des Verfahrens zur Verschraubung einer Flanschverbindung werden ein erster Flansch und ein zweiter Flansch zur Herstellung einer Flanschverbindung derart aufeinander gelegt, dass Flanschausnehmungen der beiden Flansche fluchtend über einander angeordnet sind. In die Flanschausnehmungen werden Bolzensysteme eingebracht, die bevorzugt zumindest einen Bolzen und zwei Muttern aufweisen. Die Muttern sind weiter bevorzugt derart ausgestaltet, dass diese ein Innengewinde aufweisen, das eine Geometrie eines gelängten Bolzenaußengewindes entspricht. Weiterhin sind die Muttern bevorzugt derart ausgestaltet, dass eine Verwendung von Unterlegscheiben nicht notwendig ist.

Mittels eines Spaltmessgerätes wird zumindest radial von jedem Bolzensystem ein Spaltmaß zwischen dem ersten Flansch und dem zweiten Flansch ermittelt. Das Spaltmaß kann direkt beispielsweise durch Verwendung eines optischen Messverfahrens oder einer Fühlerlehre ermittelt werden. In einer weiteren Ausgestaltung ist vorgesehen das Spaltmaß indirekt ermittelt wird, indem die Dicke der Flanschverbindung über einen Umfang, insbesondere radial von jedem Bolzensystem, gemessen wird. Anhand der gewonnen Daten werden wie oben beschrieben Relativspaltmaße ermittelt, die jeweils den Bolzensystemen zugeordnet werden. Die Bolzensysteme werden in Abhängigkeit von den ihnen zugeordneten Relativspaltmaßen gruppiert, vorzugsweise in elf Gruppen. Daraufhin werden in einem ersten Anziehschritt die Bolzensysteme, die der ersten Gruppe mit den größten Relativspaltmaßen zugeordnet sind, zuerst angezogen. Nachdem der erste Bolzen der ersten Gruppe angezogen ist, wird der nächstliegende zweite Bolzen der ersten Gruppe entsprechend angezogen. Sind alle Bolzen der ersten Gruppe angezogen erfolgt ein Anziehen der zweiten und allen weiteren Gruppen analog.

Der erste Anziehschritt kann derart erfolgen, dass ein Anziehmittel, bevorzugt eine Bolzenspannvorrichtung, an den Bolzen eines ersten Bolzensystems, das der ersten Gruppe zugeordnet ist, angebracht. Es wird eine Zugkraft auf den Bolzen aufgebracht, bis eine bestimmte Maximalkraft erreicht ist, und ein Längungswert ermittelt, der mit einer Bolzenlängung einer Bolzenspannvorrichtungskompression und einer Flanschkompression der Flanschverbindung korreliert. Daraufhin wird die erste Mutter des Bolzensystems nachgedreht und die Zugkraft abgelassen. Längen und Nachdrehen der ersten Mutter wird zumindest einmalig wiederholt. Bei dem Anziehschritt werden die ermittelten Werte für Zugkraft und Längungswert ermittelt und die Flanschkompression und die Flanschkompressionskraft bestimmt. Entweder sind die Bolzensysteme nach dem ersten Anziehschritt mit einem Sollverspannungswert angezogen oder die Bolzensysteme werden derart angezogen, dass diese eine erste Flanschkompressionskraft in die Flanschverbindung einbringen. Vorzugsweise erfolgt danach ein zweiter Anziehschritt, bei dem alle Bolzensysteme bevorzugt nacheinander beziehungsweise in beliebiger Reihenfolge angezogen werden.

Alternativ wird im ersten Anziehschritt die Bolzensysteme, die der ersten Gruppe mit den größten Spaltmaß zugeordnet sind, derart mittels eines Anziehmittels angezogen, dass das Spaltmaß verringert wird. Beispielsweise wird das Spaltmaß auf ein Referenzspaltmaß von etwa 30 % verringert. Beispielhaft wird mittels des Spaltmessgerätes beim Anziehen das Spaltmaß überwacht beziehungsweise gemessen. Vorzugsweise erfolgt daraufhin ein zweiter Anziehschritt. Der zweite Anziehschritt kann derart erfolgen, dass ein Anziehmittel, bevorzugt eine Bolzenspannvorrichtung, an den Bolzen eines ersten Bolzensystems, das der ersten Gruppe zugeordnet ist, angebracht wird. Es wird eine Zugkraft auf den Bolzen aufgebracht, bis eine bestimmte Maximalkraft erreicht ist, und ein Längungswert ermittelt, der mit einer Bolzenlängung einer Bolzenspannvorrichtungskompression und einer Flanschkompression der Flanschverbindung korreliert. Daraufhin wird die erste Mutter des Bolzensystems nachgedreht und die Zugkraft abgelassen. Längen und Nachdrehen der ersten Mutter wird zumindest einmalig wiederholt. Bei dem zweiten Anziehschritt werden die ermittelten Werte für Zugkraft und Längungswert ermittelt und die Flanschkompression und die Flanschkompressionskraft bestimmt und bevorzugt dokumentiert.

Weiterhin wird ein Messwagen zur Messung zumindest einer Vielzahl von Bolzensystemen einer Flanschverbindung zuordenbaren Spaltmaßen zwischen einem ersten Flansch und einem zweiten Flansch gemäß dem obigen Verfahren vorgeschlagen, zumindest umfassend zumindest ein Spaltmessgerät und eine Bewegungseinrichtung, wobei die Bewegungseinrichtung zumindest ein erstes Bewegungselement und zumindest ein Gestell aufweist, wobei an dem Gestell das erste Bewegungselement und das Spaltmessgerät angeordnet sind, wobei das erste Bewegungselement auf einem ersten Flansch anordenbar sind.

Erfindungsgemäß ist ein Bewegungselement ein Element, das erlaubt den Messwagen auf der Flanschverbindung zu bewegen. Bevorzugt ist ein Bewegungselement ein Rad oder ein Gleitelement.

Die Bewegungseinrichtung ist insbesondere derart gestaltet, dass der Messwagen auf dem Flansch insbesondere in Umfangsrichtung bewegbar ist. In einer Ausgestaltung ist die Bewegungseinrichtung motorisch angetrieben. In einer weiteren Ausgestaltung ist die Bewegungseinrichtung rollbar auf dem Flansch anordenbar. In einer weiteren Ausgestaltung ist vorgesehen, dass dieser zumindest ein zweites Bewegungselement aufweist, das bevorzugt unter einem zweiten Flansch anordenbar ist. Weiterhin ist in einer Ausführungsform vorgesehen, dass das erste Bewegungselement und das zweite Bewegungselement bevorzugt mittels eines Federmechanismus den Flansch einklemmen, um insbesondere einen sicheren Halt des Messwagens an der Flanschverbindung zu gewährleisten.

In einer bevorzugten Ausgestaltung ist vorgesehen, dass mittels des zumindest einen Spaltmessgeräts eine Dicke einer Flanschverbindung aus dem ersten Flansch und dem zweiten Flansch messbar ist. Durch Ermittlung der Unterschiede der Dicke, die den jeweiligen Bolzensystemen zugeordnet ist, ist wie oben erläutert ein Relativspaltmaß ermittelbar. In einer weiteren Ausführungsform ist vorgesehen, dass der Messwagen zumindest ein zweites Bewegungselement aufweist, welches unter den zweiten Flansch anordenbar ist, wobei mittels des ersten Bewegungselementes und des zweiten Bewegungselementes der Messwagen auf der Flanschverbindung klemmbar ist, und ein Abstand des ersten Bewegungselementes zu zweiten Bewegungselement messbar ist.

In einer weiteren Ausführungsform ist vorgesehen, dass der Messwagen alternativ oder zusätzlich ein optisches Spaltmessgerät aufweist. Insbesondere umfasst das optische Spaltmessgerät eine Kamera und/oder ein Lasermessgerät. In einer weiteren Ausführungsform weist das Spaltmessgerät eine Fühlerlehre oder ein Messschieber auf, mit dem der Spalt zwischen den Flanschen vorzugsweise mechanisch abtastbar ist.

In einer Ausgestaltung sind die Messdaten eines ersten Spaltmessgerätes mit demjenigen einen zweiten Spaltmessgerät und gegebenenfalls mit weiteren Messdaten vergleichbar beziehungsweise gegenseitig validierbar.

In einer Ausgestaltung weist der Messwagen den Rechner auf. In einer weiteren Ausgestaltung ist der Rechner extern mittels einer kabelgebundenen oder kabellosen Datenverbindung mit den Messergebnissen versorgbar. Besonders bevorzugt umfasst Rechner eine Informationseinheit, die ein manuelles Ausführen des oben beschriebenen Verfahrens erlaubt. Bevorzugt werden die Messergebnisse derart insbesondere graphisch aufgearbeitet und von der Informationseinheit ausgegeben, dass ein Benutzer schnell erfassen kann, welcher Verfahrensschritt als nächstes auszuführen ist.

In einer beispielhaften Ausgestaltung des Messwagens umfasst der Messwagen ein oben beim Detail beschriebenes Spaltmessgerät und eine Bewegungseinrichtung. Die Bewegungseinrichtung umfasst ein Gestell mit zumindest einem ersten Bewegungselement und einem zweiten Bewegungselement, wobei zwischen dem ersten Bewegungselement und dem zweiten Bewegungselement eine Flanschverbindung anordenbar ist. Mittels des Spaltmessgeräts, das an dem Gestell angeordnet ist, ist zumindest einen Abstand der Bewegungselemente messbar. Aus dem ermittelten Abstand ist, insbesondere wenn die mittlere Dicke der einzelnen Flansche bekannt ist, ein Spaltmaß zwischen den Flanschen ermittelbar. Der Messwagen ist derart ausgestaltet, dass dieser motorisch oder handgeführt auf einem Umfang der Flanschverbindung bewegbar ist. Somit das Spaltmaß an jedem Bolzensystem ermittelbar. Bevorzugt weist der Messwagen ein Detektionsmittel für die Bolzensysteme auf, mittels dem bevorzugt eine Messung eines Spaltmaßes auslösbar ist.

In einer weiteren beispielhaften Ausgestaltung ist vorgesehen, dass der Messwagen zusätzlich oder alternativ ein optisches Spaltmessgerät aufweist, beispielsweise eine Kamera, mit dem das Spaltmaß optisch bestimmbar ist. Beispielsweise sind mittels des optischen Spaltmessgerätes Messwerte eines weiteren Spaltmessgerätes validierbar.

Weiterhin wird ein Roboter vorgeschlagen, wobei dieser einen oben beschriebenen Messwagen und zumindest ein Anziehmittel zum Anziehen von Bolzensystemen aufweist.

In einer Ausführungsform ist vorgesehen, dass Roboter und Messwagen miteinander verbunden sind. In einer weiteren Ausführungsform ist vorgesehen, dass der Roboter und der Messwagen einzeln verfahrbar sind, wobei insbesondere der Messwagen die Messwerte oder das als nächstes anzuziehenden Bolzensystem oder eine Gruppe von anzuziehenden Bolzensystemen an den Roboter sendet.

Mittels des Roboters kann ein automatisches oder semiautomatisches Anziehen der Bolzensysteme an einer Flanschverbindung erfolgen. Insbesondere sind mittels des Roboters die Spaltmaße der Flanschverbindungen insbesondere radial zu den einzelnen Bolzensystemen ermittelbar. Weiter bevorzugt und ist der Roboter derart ausgestaltet, dass die ermittelten Spaltmaße insbesondere mittels eines Rechners des Roboters oder des Messwagens sortierbar oder gruppierbar sind, um eine optimale Anziehreihenfolge festzulegen. Mittels des Roboters sind die einzelnen Bolzensysteme anfahrbar, wobei insbesondere mittels des Anziehmittels die Bolzensysteme nach dem oben beschriebenen Verfahren anziehbar sind.

Besonders bevorzugt weist der Roboter einen Rechner auf, der die Speicherung der Messwerte, die Sortierung oder Gruppierung der Messwerte und die Steuerung der Bewegungseinrichtung zum Anfahren der einzelnen Bolzensysteme verwaltet. Weiter bevorzugt speichert der Rechner des Roboters die beim Anziehen der Bolzensysteme ermittelten Werte für Flanschkompression, die Verformung des Flansches unter der ersten Mutter des Bolzensystems und/oder die Flanschkompressionskraft.

In einer beispielhaften Ausgestaltung weißt der Roboter ein Spaltmessgerät und eine Bewegungseinrichtung auf, wobei die Bewegungseinrichtung zumindest ein erstes Bewegungselement und zumindest ein zweites Bewegungselement aufweist, die über ein Gestell miteinander verbunden sind und beidseitig auf beziehungsweise unter der Flanschverbindung positionierbar sind. An dem Gestell ist weiterhin ein Spaltmessgerät angeordnet, das zumindest ein Spaltmaß zwischen den Flanschen der Flanschverbindung misst. Mittels eines Rechners sind die Messergebnisse sortierbar und/oder gruppierbar und eine Anfahrreihenfolge des Roboters festlegbar. Mittels der Bewegungseinrichtung ist der Roboter auf der Flanschverbindung insbesondere in Umfangsrichtung um oder auf der Flanschverbindung bewegbar, so dass dieser die einzelnen Bolzensysteme nach der festgelegten Reihenfolge in einem oder mehreren Anziehschritten anfahren und anziehen kann.

Weitere vorteilhafte Ausgestaltungen gehen aus den nachfolgenden Figuren hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen

FIG. 1    eine Flanschverbindung;
FIG. 2    die Flanschverbindung im Schnitt II-II aus FIG. 1;
FIG. 3    eine grafische Widergabe von Messergebnissen;
FIG. 4    eine Skizze eines Roboters; und
FIG. 5    eine Skizze einer Flanschkompression und einer Bolzenlängung.

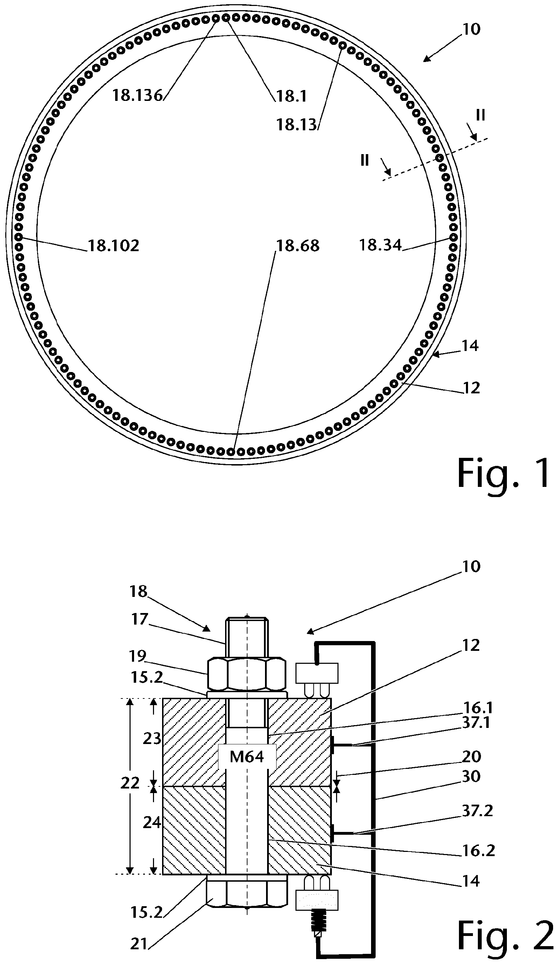

FIG. 1 zeigt eine Flanschverbindung 10 in einer Aufsicht. Die Flanschverbindung 10 umfasst einen ersten Flansch 12 und einen darunter angeordneten in FIG. 1 nicht sichtbaren zweiten Flansch 14. Die Flanschverbindung 10 weist eine Vielzahl von Bolzensystemen 18.1 bis 18.136 auf, die der Übersichtlichkeit halber nicht alle mit Bezugszeichen versehen sind.

FIG. 2 zeigt eine Schnittansicht II-II aus FIG. 1 an einem beliebigen Bolzensystem 18. Das Bolzensystem 18 der FIG. 2 ist als eine HV-Schraubengarnitur der beispielhaften Größe M64 ausgestaltet. Das Bolzensystem 18 weist einen Bolzen 17, eine Mutter 19 und Unterlegscheiben 15.1 und 15.2 auf. Der Bolzen 17 umfasst des Weiteren ein Widerlager 21, das als Schraubenkopf ausgestaltet ist. Das Bolzensystem 18 ist in Flanschausnehmungen 16.1 und 16.2 des ersten Flansches 12 und des zweiten Flansches 14 angeordnet.

Der erste Flansch 12 weist eine erste Dicke 23 auf. Der zweite Flansch 14 weist eine zweite Dicke 24 auf. Mittels eines skizzierten Spaltmessgerätes 30, das nicht aus FIG. 1 hervor geht, kann eine Dicke 22 der Flanschverbindung 10 ermittelt werden. Durch Bestimmung Abweichung der Dicke 22 der Flanschverbindung von der Summe der ersten Dicke 23 und der zweiten dicke 24, kann auf ein Spaltmaß 20 zwischen dem ersten Flansch 12 und dem zweiten Flansch 14 geschlossen werden. Weiterhin sind Abstandshalter 37.1 und 37.2 skizziert, die einen insbesondere einstellbaren Abstand des Spaltmessgerätes 30 zur Flanschverbindung 10 waren.

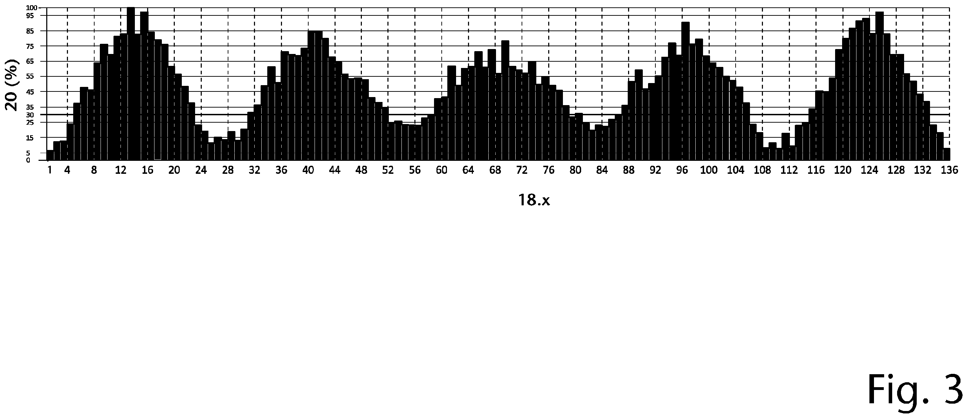

FIG. 3 zeigt eine grafische Wiedergabe von Messergebnissen der Spaltmaße 20 im Wesentlichen radial von jedem Bolzensystem 18.1 bis 18.136. Die Spaltmaße 20 sind hier als relative Werte angegeben, die mittels der Gleichung $S_\% = (Sp - Sp_{min}) / (Sp_{max} - Sp_{min})*100$ ermittelt werden, wobei $S_\%$ das Spaltmaß 20 an dem jeweiligen Bolzensystem 18.1 bis 18.136, Sp die Dicke 22 der Flanschverbindung 10 an den jeweiligen Bolzensystem 18.1 bis 18.136, $Sp_{max}$ die größte gemessene Dicke 22 der Flanschverbindung 10 an dem Bolzensystem 18.13 und $Sp_{min}$ die Summe der Dicken 23 und 24 der Flansche 12 und 14 ist.

Zu erkennen ist, dass die Flansche 12 und 14 nicht plan aufeinander aufliegen sondern vielmehr in sich "gewellt" sind beziehungsweise Toleranzen in der Ebenheit aufweisen, die zu einer sich über den Umfang der Flanschverbindung 10 veränderlichen Spaltbildung führt. Um eine Schüsselung der Flansche 12 und 14 beim Anziehen der Bolzensysteme 18.1 bis 18.136 zu verhindern, werden die Bolzensysteme 18.1 bis 18.136 zuerst angezogen, bei denen die Flanschverbindung 10 den größten Spalt aufweist. Hierzu können vorteilhafterweise die Bolzensysteme 18.1 bis 18.136 gruppiert werden, um die Wege beim Anziehen der einzelnen Bolzensysteme 18.1 bis 18.136 um die Flanschverbindung 10 herum zu minimieren. Beispielsweise werden elf Gruppen mit Bolzensystemen 18.1 bis 18.136 erzeugt, die nacheinander Angezogen werden, wobei innerhalb einer Gruppe der nächstliegende Bolzen 18.1 bis 18.136 angezogen wird. Die Messwerte aus FIG. 3 können in folgende Gruppen eingeteilt werden:

| Gruppe | Umfang | Anzahl |
|--------|--------|--------|
| 11 | 0%-5% | 1 |
| 10 | >5 %-15 % | 12 |
| 9 | >15 %-25 % | 20 |
| 8 | >25 %-35 % | 10 |
| 7 | >35 %-45 % | 13 |
| 6 | >45 %-55 % | 22 |

| 5 | >55 %-65 % | 20 |
|---|-----------|----|
| 4 | >65 %-75 % | 14 |
| 3 | >75 %-85 % | 17 |
| 2 | >85 %-95 % | 4 |
| 1 | >95 %-100 % | 3 |

Insbesondere ist in einem ersten Anziehschritt vorgesehen, dass die Spaltmaße 20, die den Bolzensystemen 18.1 bis 18.136 zugeordnet sind, auf ein relatives Spaltmaß von etwa 30 % oder weniger reduziert werden. Hierzu werden erst die Bolzensysteme der ersten Gruppe angezogen. Danach die Bolzensysteme der zweiten Gruppe und so weiter bis zu den Bolzensystemen der achten Gruppe. In einem zweiten Schritt werden Bolzensysteme 18.1 bis 18.136 mit einen Sollverspannungswert angezogen, der insbesondere eine Soll-Vorspannkraft des jeweiligen Bolzensystems umfasst. Hierzu werden bevorzugt die Bolzensysteme der Reihe nach angezogen bevorzugt immer im Wechsel mit einem gegenüberliegenden Bolzensystem. Wie im allgemeinen Beschreibungsteil beschrieben, können die Bolzensysteme 18.1 bis 18.136 auch unmittelbar in einem ersten Anziehschritt mit jeweils einem Soll-Verspannungswert angezogen werden.

Ebenfalls ist in einer Ausführung vorgesehen, dass die Bolzensysteme 18. 1 bis 18.136 - wie im allgemeinen Beschreibungsteil beschrieben - entsprechend des jeweiligen zugeordneten Spaltmaßes 20.1 bis 20.136 sortiert und entsprechend dieser Sortierung angezogen werden.

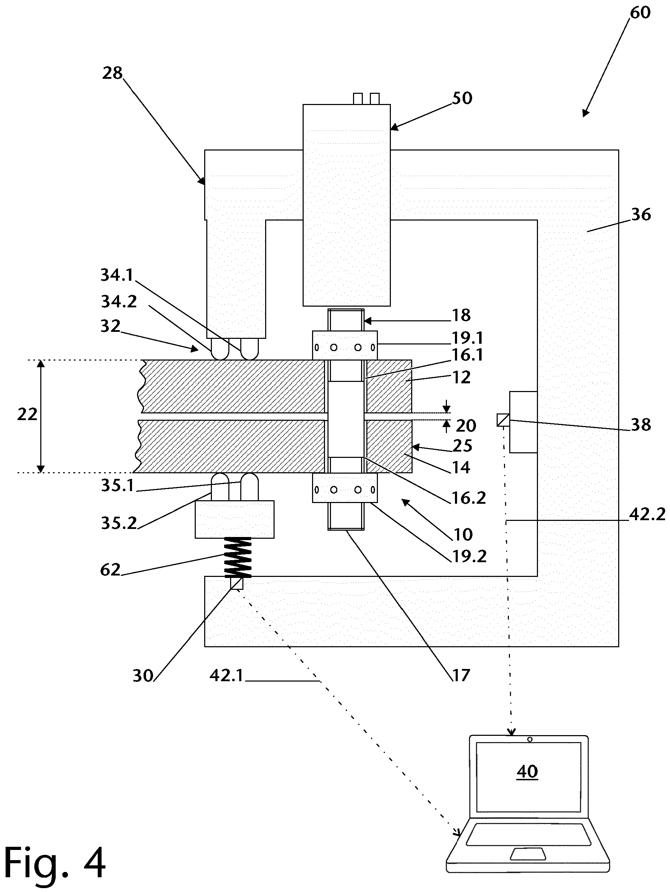

FIG. 4 zeigt eine Skizze eines Roboters 60, der an einer Flanschverbindung 10 montiert ist. Die Flanschverbindung 10 weist einen ersten Flansch 12 und einen zweiten Flansch 14 auf, die mit einem Spaltmaß 20 an dem gezeigten Bolzensystem 18 voneinander beabstandet sind. Das Bolzensystem 18 ist in die Flanschausnehmungen 16.1 und 16.2 der Flansche 12 und 14 eingebracht und weist einen Bolzen 17 und zwei Muttern 19.1 und 19.2 auf. Vorzugsweise weisen die Muttern 19.1 und 19.2 ein hier nicht sichtbares Innengewinde auf, das eine Geometrie aufweist, welche einem mit einer Anziehmittel 50 gelängten Bolzen 17 entspricht. Die Muttern 19.1 und 19. 2 sind des Weiteren derart ausgestaltet, dass die Verwendung einer Unterlegscheibe obsolet ist.

Der Roboter umfasst einen Messwagen 28 der wiederum ein Gestell 36 umfasst, an dem Teile des Roboters 60 angeordnet sind. Der Roboter 60 weist eine Bewegungseinrichtung 32 mit einer Anzahl von Bewegungselementen 34.1, 34.2, 35.1 und 35.2 auf, die hier beispielhaft als Räder ausgestaltet sind, mittels denen der Roboter auf der Flanschverbindung 10 verfahrbar. Insbesondere sind die Bewegungselemente 34.1, 34.2, 35.1 und 35.2 derart ausgestaltet, dass der Roboter 60 in Umfangsrichtung auf der Flanschverbindung 10 bewegbar ist. Vorzugsweise sind die Bewegungselemente 34.1, 34.2, 35.1 und 35.2 motorisch angetrieben, so dass der Roboter 60 automatisch oder semiautomatisch eine Messung der Spaltmaße 20 vornehmen und weiter bevorzugt einzelne Bolzensysteme 18 anfahren kann. Die Bewegungselemente 34.1 und 34.2 sind gegenüberliegend den Bewegungselementen 35.1 und 35.2 angeordnet und mittels eines Federmechanismus 62 mit der Flanschverbindung 10 verspannt. Ein Spaltmessgerät 30 misst einen Abstand der Bewegungselemente 34.1, 34.2 und 35.1, 35.2 zueinander und somit die Dicke 22 der Flanschverbindung 10 insbesondere radial von jedem Bolzensystem 18. Weiterhin weist der Roboter 60 eine Kamera 38 auf, die auf eine Flanke 25 der Flanschverbindung 10 gerichtet ist. Die Messdaten des Spaltmessgerätes 30 und die Daten der Kamera 38 werden mittels Datenverbindungen 42.1 und 42.2 an einen Rechner 40 gesendet. Im Rechner 40 erfolgt dann eine Auswertung der Messergebnisse und infolge dessen eine Ansteuerung des Roboters 60. Mittels eines Anziehmittels 50, das am Roboter 60 angeordnet und das als hydraulische Bolzenspannvorrichtung ausgestaltet ist, sind die einzelnen Bolzensysteme 18 anziehbar.

Wie im allgemeinen Beschreibungsteil beschrieben können auch andere optische oder mechanische Messverfahren für die Bestimmung des Spaltmaßes 20 verwendet werden.

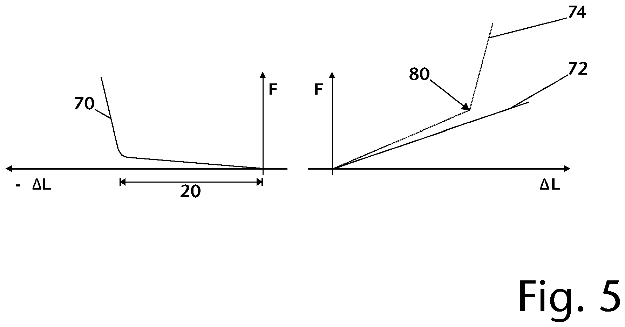

FIG. 5 zeigt eine Skizze einer Flanschkompression 70 und einer Bolzenlängung 72. Bei einer Zugkraft F auf einen Bolzen 17 eines Bolzensystems 18 , die FIG. 2 zu entnehmen sind, erfolgt eine Bolzenlängung 72 und gleichzeitig eine Flanschkompression 70, das heißt eine Stauchung der Flanschverbindung 10. Es wird aus FIG. 5 erkenntlich, dass eine relativ geringe Kraft F aufgewendet werden muss, um das Spaltmaß 20 zu schließen. Sobald das Spaltmaß 20 geschlossen ist, ist für eine weitere Stauchung $\Delta L$ der Flanschverbindung 10 das Ver-

hältnis von ∆L/F steiler. Hingegen ist die Steigung der Bolzenlängung 74 entsprechen dem Hookschen Gesetz gleichbleibend.

Die Addition der Flanschkompression 70 und der Bolzenlängung 72 führen zu der skizzierten Summandenkurve 74. Aus der Summandenkurve 74 ist, unter Vernachlässigung der Kompression des Anziehmittels 50, bei Anwendung des in der allgemeinen Beschreibung beschriebenen Verfahrens zum Anziehen eines Bolzensystems 20 mit einer hydraulischen Spannvorrichtung im Wesentlichen erkennbar, dass das Spaltmaß 20 am Knickpunkt 80 geschlossen ist. In einer Ausgestaltung werden diese Messergebnisse verwendet, um zu ermitteln, ob zusätzliche Maßnahmen getroffen werden müssen, um eine minimal erforderliche Flanschkompressionskraft einzustellen. Beispielsweise, wenn die Spaltmaße nicht schließbar sind, ohne die Bolzensysteme 18 über ein vorgegebenes Maß zu längen, werden in den Figuren nicht dargestellte Spaltmaßbleche in entsprechende Bereiche der Flanschverbindung zwischen die Flansche eingelegt und anschließend erneut die entsprechenden Bolzensysteme angezogen.

Mit dem Vorgeschlagenen Verfahren sowie dem Messwagen 28 und/oder dem Roboter 60 wird die Installation von Flanschverbindungen insbesondere für Windkraftanlagen oder Drehkrane wesentlich kostengünstiger. Weiterhin wird die Zuverlässigkeit der Bolzensysteme verbessert, da Spalte zwischen den Flanschen 12, 14 effizient verschließbar sind, was insbesondere zu geringeren Wartungskosten der Flanschverbindung 10 führt. Zudem werden Zustandsaussagen für die einzelnen Bolzensysteme 18 möglich, die ein Versagensrisiko der jeweiligen Verbindung erkennbar machen und weiter bevorzugt kann ein Versagen der Bolzensysteme 18 durch einleiten entsprechender Maßnahmen rechtzeitig verhindert werden.

## Patentansprüche

1. Verfahren zur Verschraubung einer Flanschverbindung (10) umfassend zumindest einen ersten Flansch (12), einen zweiten Flansch (14) und eine Vielzahl von Bolzensystemen (18.1...18.136), wobei

    - der erste Flansch (12) und der zweite Flansch (14) jeweils eine Vielzahl von Flanschausnehmungen (16.1...16.136) aufweisen, die jeweils zueinander ausrichtbar sind und in denen die Vielzahl von Bolzensystemen (18.1...18.136) anordenbar sind,
    - zumindest eine Vielzahl von den Bolzensystemen (18.1...18.136) zuordenbaren Spaltmaßen (20.1...20.136) zwischen dem ersten Flansch (12) und dem zweiten Flansch (14) gemessen werden,
    - die einzelnen gemessenen Spaltmaße (20.1...20.136) auswertbar und den einzelnen Bolzensystemen (18.1...18.136) zuordenbar gespeichert werden,
    - mittels eines Anziehmittels (50) die Bolzensysteme (18.1...18.136) in einer Reihenfolge in Abhängigkeit der diesen zugeordneten Spaltmaße (20.1...20.136) angezogen werden; **dadurch gekennzeichnet, dass**
    - die Bolzensysteme (18.1...18.136) in zumindest einem ersten Anzugsschritt angezogen werden, bis ein jeweils zugeordnetes Spaltmaß (20) kleiner oder gleich einem Referenzspaltmaß ist.

2. Verfahren nach Anspruch 1, wobei die Spaltmaße (20.1...20.136) gruppiert werden in Bereiche von Spaltmaßen (20).

3. Verfahren nach Anspruch 2, wobei Bolzensysteme (18.13, 18.15, 18.125), die einer ersten Gruppe mit den größten Spaltmaßen (20) zuordenbar sind, zuerst angezogen werden.

4. Verfahren nach einem oder mehreren der vorherigen Ansprüche, wobei in einem zweiten Anzugsschritt alle Bolzensysteme (18.1...18.136) mit einem Sollverspannungswert angezogen werden.

5. Messwagen (28) zur Messung von zumindest einer Vielzahl von Bolzensystemen (18.1...18.136) einer Flanschverbindung (10) zuordenbaren Spaltmaßen (20.1...20.136) zwischen einem ersten Flansch (12) und einem zweiten Flansch (14) nach einem Verfahren gemäß einem oder mehreren der Ansprüche 1 bis 4, zumindest umfassend zumindest ein Spaltmessgerät (30) und eine Bewegungseinrichtung (32), wobei

    - die Bewegungseinrichtung (32) zumindest ein erstes Bewegungselement (34.1, 34.2) und zumindest ein Gestell (36) aufweist,
    - an dem Gestell (36) das erste Bewegungselement (34.1, 34.2) und das Spaltmessgerät (30) angeordnet sind,
    - das erste Bewegungselement (34.1, 34.2) auf dem ersten Flansch (12) anordenbar ist;
    - das Spaltmessgerät (30) eine Datenverbindung (42) zu einem Rechner (40) aufweist, auf dem Messergebnisse auswertbar gespeichert werden.

6. Messwagen (28) nach Anspruch 5, wobei das mittels dem Spaltmessgerät (30) eine Dicke (22) einer Flanschverbindung (10) aus dem ersten Flansch (12) und dem zweiten Flansch (14) messbar ist.

7. Messwagen (28) nach einem oder mehreren der Ansprüche 5 bis 6, wobei

- dieser zumindest ein zweites Bewegungselement (35.1, 35.2) aufweist, welches unter den zweiten Flansch (14) anordenbar ist,
- mittels des ersten Bewegungselementes (34.1, 34.2) und des zweiten Bewegungselementes (35.1, 35.2) der Messwagen (28) auf der Flanschverbindung (10) klemmbar ist, und ein Abstand des ersten Bewegungselementes (34.1, 34.2) zum zweiten Bewegungselement (35.1, 35.2) messbar ist.

8. Messwagen (28) nach einem oder mehreren der Ansprüche 5 bis 7, wobei das Spaltmessgerät (30) eine Kamera (38), ein Lasermessgerät, eine Fühlerlehre und/oder einen Messschieber umfasst.

9. Roboter (60) zur Ausführung eines Verfahrens nach einem oder mehreren der Ansprüche 1 bis 4, wobei dieser einen Messwagen (28) nach einem oder mehreren der Ansprüche 5 bis 8 und zumindest ein Anziehmittel (50) zum Anziehen von Bolzensystemen (18.1...18.136) aufweist.

## Claims

1. Method of screwing a flange connection (10) comprising at least a first flange (12), a second flange (14) and a plurality of bolt systems (18.1...18.136), wherein

   - the first flange (12) and the second flange (14) each have a plurality of flange recesses (16.1...16.136) which can each be aligned with one another and in which the plurality of bolt systems (18.1...18.136) can be arranged,
   - at least a plurality of gap dimensions (20.1...20.136) which can be assigned to the bolt systems (18.1...18.136), are measured between the first flange (12) and the second flange (14),
   - the individual measured gap dimensions (20.1...20.136) can be evaluated and stored in such a way that they can be assigned to the individual bolt systems (18.1...18.136),
   - by means of a tightening means (50) the bolt systems (18.1...18.136) are tightened in a sequence depending on the gap dimensions (20.1...20.136) assigned to them; **characterized in that**
   - the bolt systems (18.1...18.136) are tightened in at least one first tightening step until a respective associated gap dimension (20) is smaller than or equal to a reference gap dimension.

2. Method according to claim 1, wherein the gap dimensions (20.1...20.136) are grouped into ranges of gap dimensions (20).

3. Method according to claim 2, wherein bolt systems (18.13, 18.15, 18.125) which can be assigned to a first group with the largest gap dimensions (20) are tightened first.

4. Method according to one or more of the preceding claims, wherein in a second tightening step all bolt systems (18.1...18.136) are tightened with a nominal tightening value.

5. Measuring cart (28) for measuring gap dimensions (20.1...20.136) between a first flange (12) and a second flange (14) which can be assigned to at least a plurality of bolt systems (18.1...18.136) of a flange connection (10) according to a method according to one or more of claims 1 to 4, at least comprising at least one gap measuring device (30) and a movement device (32), wherein

   - the movement device (32) comprises at least one first movement element (34.1, 34.2) and at least one frame (36),
   - the first movement element (34.1, 34.2) and the gap measuring device (30) are arranged on the frame (36),
   - the first movement element (34.1, 34.2) can be arranged on the first flange (12);
   - the gap measuring device (30) has a data connection (42) to a computer (40) on which measurement results are stored in an evaluable manner.

6. Measuring cart (28) according to claim 5, wherein by means of the gap measuring device (30) a thickness (22) of a flange connection (10) of the first flange (12) and the second flange (14) can be measured.

7. Measuring cart (28) according to one or more of claims 5 to 6, wherein

   - said measuring cart (28) has at least one second movement element (35.1, 35.2) which can be arranged below the second flange (14),
   - said measuring cart (28) can be clamped on the flange connection (10) by means of the first movement element (34.1, 34.2) and the second movement element (35.1, 35.2), and a distance between the first movement element (34.1, 34.2) and the second movement element (35.1, 35.2) can be measured.

8. Measuring cart (28) according to one or more of claims 5 to 7, wherein the gap measuring device (30) comprises a camera (38), a laser measuring device, a sensing gauge and/or a caliper gauge.

9. Robot (60) for carrying out a method according to one or more of claims 1 to 4, comprising a measuring cart (28) according to one or more of claims 5 to 8 and at least one tightening means (50) for tightening bolt systems (18.1...18.136).

## Revendications

1. Procédé de vissage d'un raccordement à bride (10) comprenant au moins une première bride (12), une deuxième bride (14) et une multitude de systèmes de boulon (18.1 ... 18.136), selon lequel

   - la première bride (12) et la deuxième bride (14) présentent chacune une multitude d'évidement de bride (16.1 ... 16.136) qui peuvent être alignés entre eux et dans lesquels une multitude de systèmes de boulon (18.1 ... 18.136) peuvent être disposés,
   - au moins une multitude d'écartements (20.1 ... 20.136) pouvant être associés aux systèmes de boulon (18.1 ... 18.136) sont mesurés entre la première bride (12) et la deuxième bride (14),
   - les différents écartements mesurés (20.1 ... 20.136) sont mémorisés de façon à pouvoir être évalués et associés aux différents systèmes de boulon (18.1 ... 18.136),
   - à l'aide d'un moyen de serrage (50), les systèmes de boulon (18.1 ... 18.136) sont serrés dans un ordre dépendant de celui des écartements (20.1 ... 20.136) associés, **caractérisé en ce que**
   - les systèmes de boulon (18.1 ... 18.136) sont serrés dans au moins une première étape de serrage jusqu'à ce qu'un écartement (20) associé soit égale ou inférieur à un écartement de référence.

2. Procédé selon la revendication 1, selon lequel les écartements (20.1 ... 20.136) sont groupés dans des zones d'écartements (20).

3. Procédé selon la revendication 2, selon lequel des systèmes de boulon (18.13, 18.15, 18.125) qui peuvent être associés à un premier groupe ayant les plus grands écartements (20) sont serrés en premier.

4. Procédé selon une ou plusieurs des revendications précédentes, selon lequel, dans une deuxième étape de serrage, tous les systèmes de boulon (18.1 ... 18.136) sont serrés avec une valeur de tension nominale.

5. Chariot de mesure (28) pour mesurer au moins une multitude d'écartements (20.1 ... 20.136) pouvant être associés à des systèmes de boulon (18.1 ... 18.136) d'un raccordement à bride (10) entre une première bride (12) et une deuxième bride (14) selon un procédé selon une ou plusieurs des revendications 1 à 4, comprenant au moins un appareil de mesure d'écartement (30) et un dispositif de déplacement (32), dans lequel

   - le dispositif de déplacement (32) présente au moins un premier élément de déplacement (34.1, 34.2) et au moins un châssis (36),
   - le premier élément de déplacement (34.1, 34.2) et l'appareil de mesure d'écartement sont disposés sur le châssis (36),
   - le premier élément de déplacement (34.1, 34.2) peut être disposé sur la première bride (12),
   - l'appareil de mesure d'écartement (30) présente une liaison de données (42) menant vers un ordinateur (40) sur lequel des résultats de mesure sont mémorisés de façon à pouvoir être évalués.

6. Chariot de mesure (28) selon la revendication 5, dans lequel, au moyen de l'appareil de mesure d'écartements (30), une épaisseur (22) d'un raccordement à bride (10) peut être mesurée à partir de la première bride (12) et de la deuxième bride (14).

7. Chariot de mesure (28) selon une ou plusieurs des revendications 5 à 6,

   - celui-ci présentant au moins un deuxième élément de déplacement (35.1, 35.2) lequel peut être disposé sous la deuxième bride (14),
   - au moyen du premier élément de déplacement (34.1, 34.2) et du deuxième élément de déplacement (35.1, 35.2), le chariot de mesure (28) pouvant être maintenu sur le raccordement à bride (10) et une distance du premier élément de déplacement (34.1, 34.2) au deuxième élément de déplacement (35.1, 35.2) pouvant être mesurée.

8. Chariot de mesure (28) selon une ou plusieurs des revendications 5 à 7, dans lequel l'appareil de mesure d'écartement (30) comprend une caméra (38), un appareil de mesure à laser, une jauge d'épaisseur et/ou un pied à coulisse.

9. Robot (60) pour mettre en oeuvre un procédé selon une ou plusieurs des revendications 1 à 4, celui-ci présentant un chariot de mesure (28) selon une des revendications 5 à 8 et au moins un moyen de serrage (50) pour serrer des systèmes de boulon (18.1 ... 18.136).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018110482 A1
- SU 1601424 A1

- JP 2001225231 A
- JP H08257851 A